# EUROPEAN PATENT APPLICATION

(11) **EP 4 787 541 A1**
(43) Date of publication of application: **05.08.2026**
(21) Application number: 24869578.5
(22) Date of filing: 06.02.2024
(51) Int. Cl.: H01M 10/613, H01M 10/625, H01M 10/6556, H01M 10/6567, H01M 10/617

(54) **COOLING ASSEMBLY, BATTERY PACK AND VEHICLE**

(30) Priority: 28.09.2023 CN 202322664360 U
(71) Applicant: BYD Company Limited, Shenzhen, Guangdong 518118 (CN)
(72) Inventor: ZHANG, Chengjun, Shenzhen, Guangdong 518118 (CN); CAI, Dongping, Shenzhen, Guangdong 518118 (CN); WAN, Quanyou, Shenzhen, Guangdong 518118 (CN); CAI, Chen, Shenzhen, Guangdong 518118 (CN); GONG, Xubin, Shenzhen, Guangdong 518118 (CN)
(74) Representative: Mathys & Squire
(86) International application number: PCT/CN2024/076215
(87) International publication number: WO 2025/066006

(57) **Abstract**

The present invention discloses a vehicle having a battery pack. The battery pack has a cooling assembly. The cooling assembly includes a first flow channel structure and a second flow channel structure. A liquid outlet of the first flow channel structure is configured to be in communication with a liquid inlet of the second flow channel structure; and the first flow channel structure is configured to dissipate heat for a non-terminal-pole region of a battery set, and the second flow channel structure is configured to dissipate heat for a terminal-pole region of the battery set.

## Description

### CROSS REFERENCE TO RELATED APPLICATIONS

This application claims priority to Chinese Patent Application No. 202322664360.9, filed on September 28, 2023 and entitled "COOLING ASSEMBLY, BATTERY PACK, AND VEHICLE", which is incorporated herein by reference in its entirety for all purposes.

### TECHNICAL FIELD

This application relates to the field of batteries, and more specifically, to a cooling assembly, a battery pack, and a vehicle.

### BACKGROUND

Battery sets in a battery pack have a relatively high arrangement density. In a charging or discharging process of the battery pack, a large amount of heat is generated and accumulated in the battery pack. When excessive heat is accumulated, not only charging and discharging efficiency of battery cells in the battery pack is caused to be relatively low, but also an explosion risk of the battery pack is increased. Therefore, how to dissipate heat for the battery pack is a key aspect of the battery pack. In the related technologies, the heat dissipation effect of a non-terminal-pole portion of a battery cell in the battery pack is relatively poor.

### SUMMARY

The present invention is proposed to resolve at least one of the foregoing problems. According to a first aspect of this application, a cooling assembly is provided. The cooling assembly includes: a first flow channel structure and a second flow channel structure. A liquid outlet of the first flow channel structure is configured to be in communication with a liquid inlet of the second flow channel structure; and the first flow channel structure is configured to dissipate heat for a non-terminal-pole region of a battery set, and the second flow channel structure is configured to dissipate heat for a terminal-pole region of the battery set.

In an embodiment of this application, the battery set includes a plurality of battery cells, and an extension direction of a flow channel of at least one of the first flow channel structure and the second flow channel structure is the same as an arrangement direction of the battery cells in the battery set.

In an embodiment of this application, the battery set includes a plurality of battery cells, and arrangement directions of the first flow channel structure and the second flow channel structure are both the same as a length direction of the battery cell in the battery set.

In an embodiment of this application, the first flow channel structure and the second flow channel structure are spaced apart; and the cooling assembly further includes a heat-conducting plate connected between two adjacent flow channel structures in one or more first flow channel structures and one or more second flow channel structures.

In an embodiment of this application, the heat-conducting plate is provided with a support block, and the support block is configured to support the battery set.

In an embodiment of this application, the first flow channel structure is a first harmonica tube, and the second flow channel structure is a second harmonica tube.

In an embodiment of this application, the cooling assembly includes at least two unit regions, each of the unit regions is configured to correspond to one battery set and perform heat exchange on the one battery set, and the unit region includes the first flow channel structure and the second flow channel structure; and the at least two unit regions are arranged in the length direction of the battery cell.

In an embodiment of this application, two adjacent unit regions are separated by using a first heat insulation plate.

In an embodiment of this application, the first heat insulation plate is provided with a connecting portion, the connecting portion is configured to be connected to a baffle, and the baffle is configured to separate two adjacent battery sets.

In an embodiment of this application, each of the unit regions includes a first flow channel structure and two second flow channel structures, and the first flow channel structure is located between the two second flow channel structures.

In an embodiment of this application, each of the unit regions includes two first flow channel structures and two second flow channel structures, and the two first flow channel structures are located between the two second flow channel structures.

In an embodiment of this application, the cooling assembly further includes a liquid inlet manifold, a liquid outlet manifold, and a connecting manifold. The liquid inlet manifold is in communication with a liquid inlet of the first flow channel structure; the liquid outlet manifold is in communication with a liquid outlet of the second flow channel structure; and the connecting manifold is in communication between the liquid outlet of the first flow channel structure and the liquid inlet of the second flow channel structure.

In an embodiment of this application, the cooling assembly includes at least two unit regions, each of the unit regions is configured to correspond to one battery set and perform heat exchange on the one battery set, and the unit region includes the first flow channel structure and the second flow channel structure; and the liquid inlet manifold includes at least two first liquid inlet manifolds, and each of the first liquid inlet manifolds corresponds to one unit region and is in communication with the liquid inlet of the first flow channel structure in the one unit region.

In an embodiment of this application, the liquid inlet manifold further includes a second liquid inlet manifold, and the second liquid inlet manifold is in communication with all the first liquid inlet manifolds.

In an embodiment of this application, the connecting manifold includes at least two connecting manifold segments, and different connecting manifold segments are not in communication with each other; and each unit region corresponds to one connecting manifold segment, and both the liquid outlet of the first flow channel structure and the liquid inlet of the second flow channel structure in each unit region are in communication with a corresponding connecting manifold segment.

In an embodiment of this application, the cooling assembly further includes a refrigerant connector configured to be disposed on a battery box, the refrigerant connector being provided with a liquid inlet interface and a liquid outlet interface, wherein an input port on the liquid inlet manifold is in communication with the liquid inlet interface through a liquid inlet flexible tube; and an output port on the liquid outlet manifold is in communication with the liquid outlet interface through a liquid outlet flexible tube.

In an embodiment of this application, the cooling assembly further includes a heat-conducting plate connected between two adjacent flow channel structures in one or more first flow channel structures and one or more second flow channel structures; and two ends of the heat-conducting plate are each connected to the liquid outlet manifold, the liquid inlet manifold, or the connecting manifold through a connecting block, and the connecting block is further configured to support the battery set.

In an embodiment of this application, a limiting end face is provided on a side of the connecting block toward the battery set, and the limiting end face is configured to abut against a side face of the battery set in the arrangement direction of the battery cells.

In an embodiment of this application, the cooling assembly further includes two second heat insulation plates respectively disposed on two sides of the cooling assembly in the length direction of the battery cell in the battery set.

According to a second aspect of this application, a battery pack is further provided. The battery pack includes a battery set and any of the foregoing cooling assemblies.

In an embodiment of this application, the battery set includes a terminal-pole region and a non-terminal-pole region, the terminal-pole region and the non-terminal-pole region are arranged in the length direction of the battery cell in the battery set, and the terminal-pole region is disposed at at least one end of the battery set; and the terminal-pole region accounts for 2% to 25% of a length of the battery cell in the battery set, and the non-terminal-pole region accounts for 50% to 96% of the length of the battery cell.

In an embodiment of this application, a quantity of layers of the battery set is at least two, each layer includes at least one battery set, and the first flow channel structure and the second flow channel structure are located between two adjacent layers of battery sets.

In an embodiment of this application, a stacking direction of the at least two layers of battery sets, the arrangement direction of the battery cells in the battery set, and the length direction of the battery cell are perpendicular to each other.

In an embodiment of this application, each layer of battery sets includes at least two battery sets arranged in the length direction of the battery cell.

According to a third aspect of this application, a vehicle is further provided. The vehicle includes a vehicle body and any of the foregoing battery packs disposed on the vehicle body.

According to the cooling assembly, the battery pack, and the vehicle that are provided in the embodiments of this application, the liquid outlet of the first flow channel structure is configured to be in communication with the liquid inlet of the first flow channel structure, the first flow channel structure is configured to dissipate heat for the non-terminal-pole region of the battery set, and the second flow channel structure is configured to dissipate heat for the terminal-pole region of the battery set. Therefore, a refrigerant first flows into the first flow channel structure and performs cooling on a low-temperature region of the non-terminal-pole region of the battery set, and then flows into the second flow channel structure and performs cooling on a high-temperature region of the terminal-pole region of the battery set. By using a refrigerant flow mode in which the low-temperature region is first cooled and then the high-temperature region is cooled, a heat dissipation effect on the non-terminal-pole portion of the battery cell in the battery pack is improved.

### BRIEF DESCRIPTION OF DRAWINGS

To describe technical solutions of embodiments of the present invention more clearly, the following briefly describes the accompanying drawings needed for use in the description of the embodiments. Clearly, the accompanying drawings in the following description are merely some embodiments of this application. For a person of ordinary skill in the art, other accompanying drawings can be obtained based on these accompanying drawings without paying any creative work.
FIG. 1 is a schematic diagram of a three-dimensional structure of a cooling assembly according to an embodiment of the present invention;
FIG. 2 is a schematic top view of a structure of the cooling assembly shown in FIG. 1;
FIG. 3 is a schematic front view of a structure of the cooling assembly shown in FIG. 1;
FIG. 4 is a schematic diagram of an exploded structure of a battery set and a cooling assembly according to an embodiment of the present invention; and
FIG. 5 is a schematic top view of a structure of a battery set assembled on a cooling assembly according to an embodiment of the present invention.

### Reference numerals:

11 - First liquid inlet manifold; 12 - Second liquid inlet manifold; 13 - Connecting manifold;
14 - Liquid outlet manifold; 15 - Refrigerant connector; 16 - Liquid inlet interface; 17 - Liquid outlet interface;
18 - Liquid inlet flexible tube; 19 - Liquid outlet flexible tube; 21 - First flow channel structure;
22 - Second flow channel structure; 23 - Heat-conducting plate; 24 - First heat insulation plate; 25 - Second heat insulation plate;
26 - Connecting portion; 27 - Support block; 28 - connecting block; 29 - Limiting end face;
31 - First heat dissipation region; 32 - Second heat dissipation region; 40 - Battery set; and 41 - Bottom plate.

### DESCRIPTION OF EMBODIMENTS

To make objectives, technical solutions, and advantages of the present invention more apparent, the following describes example embodiments according to the present invention in detail with reference to the accompanying drawings. Clearly, the described embodiments are merely some embodiments of the present invention, but not all the embodiments of the present invention. It will be understood that the present invention is not limited to the example embodiments described herein. Based on the embodiments of the present invention described in the present invention, all other embodiments obtained by a person skilled in the art without creative efforts should fall within the protection scope of the present invention.

In the following description, a large number of specific details are given in order to provide a more thorough understanding of the present invention. It is obvious for a person skilled in the art, however, that the present invention can be implemented without the need for one or more of these details. In other examples, to avoid confusion with the present invention, some technical features well-known in the art are not described.

It will be understood that the present invention can be implemented in different forms and should not be construed as being limited to the embodiments proposed herein. Instead, providing these embodiments will make the disclosure thorough and complete, and will fully convey the scope of the present invention to a person skilled in the art.

For a thorough understanding of the present invention, detailed structures will be proposed in the following description in order to illustrate the technical solutions proposed in the present invention. Optional embodiments of the present invention are described in detail as follows. However, in addition to these detailed descriptions, the present invention may have other implementations.

Some implementations of the present invention are described in detail below with reference to the accompanying drawings. In the case of no conflict, the following embodiments and features in the embodiments may be mutually combined.

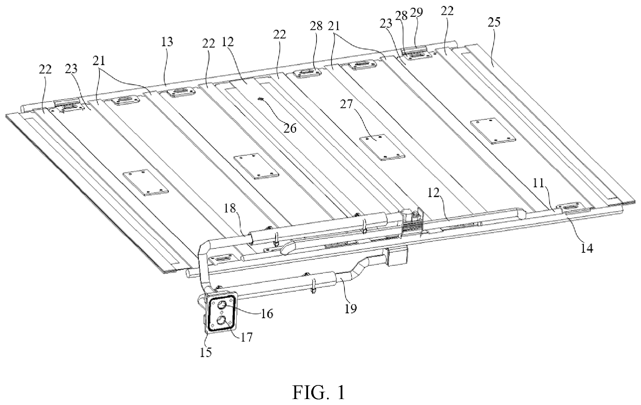

This application provides a cooling assembly. Referring to FIG. 1, FIG. 2, and FIG. 4, the cooling assembly includes a first flow channel structure 21 and a second flow channel structure 22. A liquid outlet of the first flow channel structure 21 is configured to be in communication with a liquid inlet of the second flow channel structure 22; and the first flow channel structure 21 is configured to dissipate heat for a non-terminal-pole region of a battery set 40, and the second flow channel structure 22 is configured to dissipate heat for a terminal-pole region of the battery set 40.

In the foregoing solution, the liquid outlet of the first flow channel structure 21 is configured to be in communication with the liquid inlet of the first flow channel structure 21; and the first flow channel structure 21 is configured to dissipate heat for the non-terminal-pole region of the battery set 40, and the second flow channel structure 22 is configured to dissipate heat for the terminal-pole region of the battery set 40. Therefore, a refrigerant first flows into the first flow channel structure 21 and performs cooling on a low-temperature region of the non-terminal-pole region of the battery set 40, and then flows into the second flow channel structure 22 and performs cooling on a high-temperature region of the terminal-pole region of the battery set 40. By using a refrigerant flow mode in which the low-temperature region is first cooled and then the high-temperature region is cooled, a heat dissipation effect on the non-terminal-pole portion of the battery cell in the battery pack is improved, a temperature of the non-terminal-pole portion of the battery cell is reduced, and a problem of expansion of the non-terminal-pole portion of the battery cell due to excessive temperature is avoided. The following describes the foregoing structures in detail with reference to the accompanying drawings.

When the first flow channel structure 21 and the second flow channel structure 22 are provided, any flow channel structure that has a function to circulate a refrigerant can be used. That is, as long as a flow channel structure has a function to circulate a refrigerant, the flow channel structure is within the protection scope of the embodiments of this application. For example, each flow channel structure in the first flow channel structure 21 and the second flow channel structure 22 may be a harmonica tube including a plurality of flow channels arranged side by side, that is, the first flow channel structure 21 is a first harmonica tube, and the second flow channel structure 22 is a second harmonica tube. In the related technologies, a cooling plate using a harmonica tube has a relatively poor heat dissipation effect on the non-terminal-pole region of the battery set 40. However, in some embodiments of this application, by using harmonica tubes as the first flow channel structure 21 and the second flow channel structure 22, a refrigerant can first flow into the first harmonica tube to dissipate heat for the non-terminal-pole region of the battery set 40, and then flow into the second harmonica tube to dissipate heat for the terminal-pole region of the battery set 40. First dissipating heat for the non-terminal-pole region with a relatively low temperature and then dissipating heat for the terminal-pole region with a relatively high temperature can improve a heat dissipation effect on the battery set 40. In addition, using a harmonica tube as a flow channel structure facilitates simplification of a form of a flow channel structure.

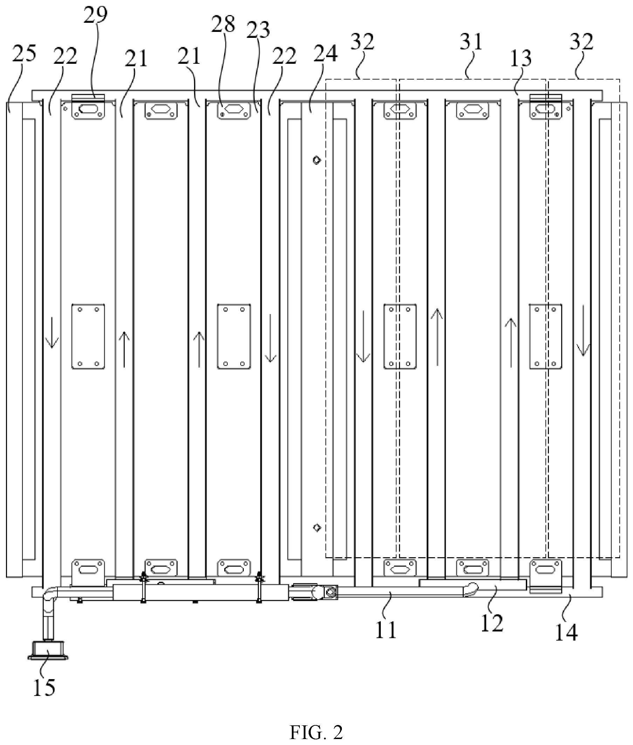

Referring to FIG. 2, each flow channel in the first flow channel structure 21 and the second flow channel structure 22 has a liquid inlet and a liquid outlet, wherein the liquid inlet is configured to allow a refrigerant to flow into a flow channel structure, and the liquid outlet is configured to discharge the refrigerant from the flow channel structure. The liquid outlet of the first flow channel structure 21 is configured to be in communication with the liquid inlet of the second flow channel structure 22. Specifically, communication between the liquid outlet of the first flow channel structure and the liquid inlet of the second flow channel structure may use various manners. For example, the liquid outlet of the first flow channel structure and the liquid inlet of the second flow channel structure may be in direct communication. In some embodiments, the liquid outlet of the first flow channel structure and the liquid inlet of the second flow channel structure may be in communication through a pipeline. In some embodiments, the liquid outlet of the first flow channel structure and the liquid inlet of the second flow channel structure may be in communication through a pipeline and a valve. The valve can be opened under some conditions, so that the liquid outlet of the first flow channel structure and the liquid inlet of the second flow channel structure are in communication. The valve can be closed under other conditions, so that the communication between the liquid outlet of the first flow channel structure and the liquid inlet of the second flow channel structure is disconnected.

By making the liquid outlet of the first flow channel structure 21 be in communication with the liquid inlet of the second flow channel structure 22, the refrigerant first flows into the first flow channel structure 21, and then flows into the second flow channel structure 22 after flowing out of the first flow channel structure 21. The first flow channel structure 21 is configured to dissipate heat for the non-terminal-pole region of the battery set 40, and the second flow channel structure 22 is configured to dissipate heat for the terminal-pole region of the battery set 40. Therefore, a refrigerant first flows into the first flow channel structure 21 and performs cooling on a low-temperature region of the non-terminal-pole region of the battery set 40, and then flows into the second flow channel structure 22 and performs cooling on a high-temperature region of the terminal-pole region of the battery set 40. By using a refrigerant flow mode in which the low-temperature region is first cooled and then the high-temperature region is cooled, a heat dissipation effect on the non-terminal-pole portion of the battery cell in the battery pack is improved.

When the terminal-pole region and the non-terminal-pole region of the battery set 40 are determined, the terminal-pole region of the battery set 40 may account for 2% to 25% of a length of the battery cell, and the non-terminal-pole region of the battery set 40 may account for 50% to 96% of the length of the battery cell. Specifically, the terminal-pole region of the battery set 40 may account for any value between 2% and 25% of the length of the battery cell, such as 2%, 5%, 8%, 10%, 13%, 15%, 18%, 20%, or 25%. The non-terminal-pole region of the battery set 40 may account for any value between 50% and 96% of the length of the battery cell, such as 50%, 55%, 60%, 65%, 70%, 75%, 80%, 85%, 90%, 95%, or 96%. For example, the terminal-pole region may account for 10% of the length of the battery cell, and the battery cell has two terminal-pole regions, which are respectively located at two ends of an extension direction of the battery cell, and the non-terminal-pole region accounts for 80% of the length of the battery cell.

It should be explained that the terminal-pole region of the battery set 40 refers to positions of end portions at which poles of all the battery cells in the battery set 40 are located. The terminal-pole region of the battery set 40 not only refers to a terminal-pole surface of the battery set 40, but also includes a preset length that extends from the terminal-pole surface of the battery set 40 toward an interior of the battery set 40. A size of the preset length is specifically related to a length of a terminal-pole in the battery set 40. That is, the terminal-pole in the battery cell not only refers to a portion exposed outside the battery set 40, but further includes a portion in the battery cell that is electrically connected to a positive electrode sheet or a negative electrode sheet in the battery cell. In a discharging or charging process of the battery set 40, the terminal-pole region of the battery set 40 generates heat relatively fast, and thus a temperature of the terminal-pole region of the battery set 40 is generally higher than that of the non-terminal-pole region (other portions other than the terminal-pole region) of the battery set 40. In this embodiment of this application, a refrigerant flowing from a liquid inlet manifold into the first flow channel structure 21 first performs cooling on the low-temperature region of the non-terminal-pole region of the battery cell, and then flows into the second flow channel structure 22 through a connecting manifold 13 and performs cooling on the high-temperature region of the terminal-pole region of the battery set 40. By using a refrigerant flow mode in which the low-temperature region is first cooled and then the high-temperature region is cooled, a heat dissipation effect on the non-terminal-pole portion of the battery cell in the battery pack is improved, a temperature of the non-terminal-pole portion of the battery cell is reduced, and a problem of expansion of the non-terminal-pole portion of the battery cell due to excessive temperature is avoided.

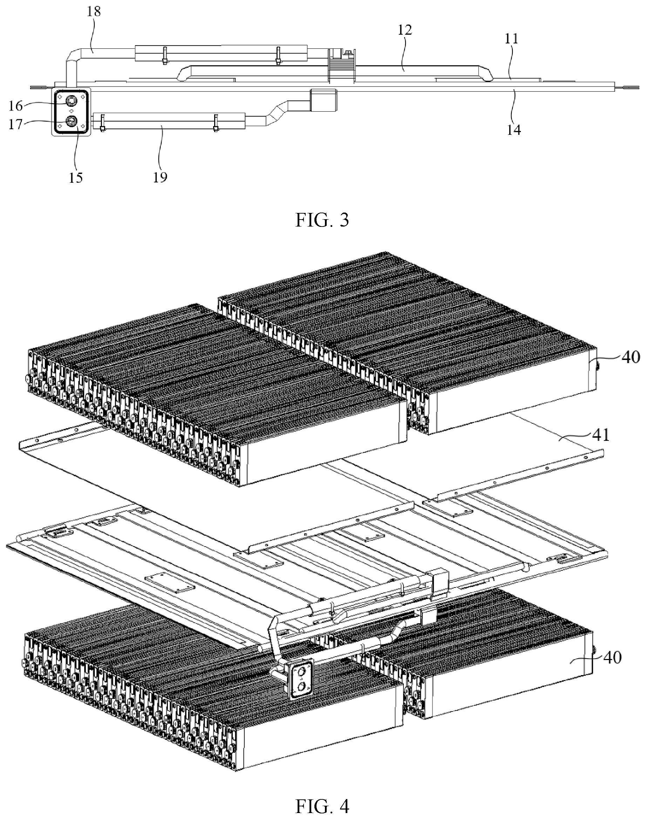

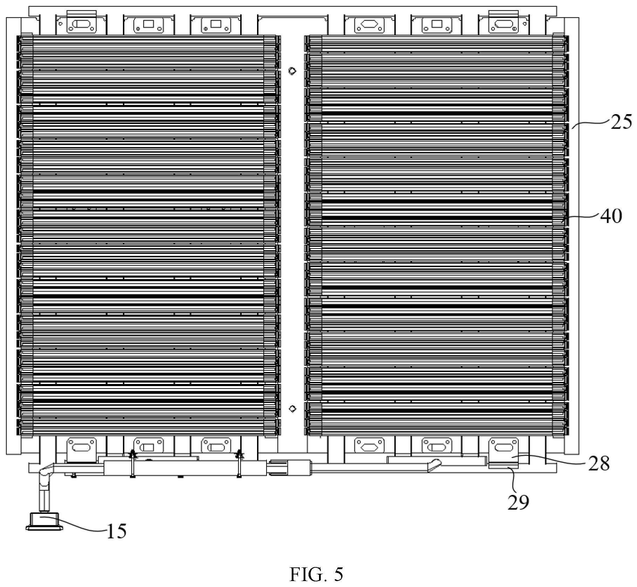

When the first flow channel structure 21 and the second flow channel structure 22 are arranged, various arrangement manners may be used, which are mainly related to positions of the terminal-pole region and the non-terminal-pole region of the battery set 40, or may be related to an arrangement direction of a plurality of battery cells in the battery set. For example, referring to FIG. 4 and FIG. 5, the battery set includes a plurality of battery cells, and an extension direction of a flow channel of at least one of the first flow channel structure 21 and the second flow channel structure 22 is the same as the arrangement direction of the battery cells in the battery set 40. Specifically, an extension direction of a flow channel of the first flow channel structure 21 may be the same as the arrangement direction of the battery cells in the battery set 40, whereas an extension direction of a flow channel of the second flow channel structure 22 is different from the arrangement direction of the battery cells in the battery set 40, for example, there may be a non-zero included angle between the two. The extension direction of the flow channel of the second flow channel structure 22 may be the same as the arrangement direction of the battery cells in the battery set 40, whereas the extension direction of the flow channel of the first flow channel structure 21 is different from the arrangement direction of the battery cells in the battery set 40, for example, there may be a non-zero included angle between the two. Extension directions of flow channels of the first flow channel structure 21 and the second flow channel structure 22 may both be the same as the arrangement direction of the battery cells in the battery set 40.

For example, the battery cells in the battery set 40 may be arranged sequentially in an extension direction of a flow channel, so that the first flow channel structure 21 is disposed opposite to a non-terminal-pole region of each battery cell, and the second flow channel structure 22 is disposed opposite to a terminal-pole region of each battery cell. This facilitates the first flow channel structure 21 to dissipate heat for the non-terminal-pole region of each battery cell in the battery set 40, and facilitates the second flow channel structure 22 to dissipate heat for the terminal-pole region of each battery cell in the battery set 40. Hereinafter, for ease of description, the extension direction of the flow channel is defined as a first direction.

It will be understood that, in addition to the arrangement manner shown above, the battery cells in the battery set 40 may be arranged in other manners. Referring to FIG. 4 and FIG. 5, in some embodiments, when the battery set includes a plurality of battery cells, arrangement directions of the first flow channel structure 21 and the second flow channel structure 22 may both be the same as a length direction of the battery cell in the battery set 40. That is, the first flow channel structure 21 and the second flow channel structure 22 are arranged in the length direction of the battery cell, so that the first flow channel structure 21 can be opposite to all the battery cells in the battery set 40, and the second flow channel structure 22 can be opposite to all the battery cells in the battery set 40. This facilitates the first flow channel structure 21 to dissipate heat for the non-terminal-pole region of each battery cell in the battery set 40, and facilitates the second flow channel structure 22 to dissipate heat for the terminal-pole region of each battery cell in the battery set 40. Hereinafter, for ease of description, the length direction of the battery cell is defined as a second direction, and the second direction is perpendicular to the first direction.

For example, referring to FIG. 1, FIG. 2, and FIG. 3, the first flow channel structure 21 and the second flow channel structure 22 may be sequentially arranged in the second direction, and each flow channel structure is disposed between a first side and a second side of the cooling assembly, wherein the first side and the second side are two opposite sides of the cooling assembly in the first direction. For example, both the first flow channel structure 21 and the second flow channel structure 22 may be extended in the first direction, and the plurality of flow channel structures are arranged in the second direction, where the first direction and the second direction are perpendicular to each other.

For example, referring to FIG. 1 and FIG. 2, the first flow channel structure 21 and the second flow channel structure 22 may be spaced apart. Quantities of the first flow channel structure 21 and the second flow channel structure 22 may each be at least one, and the first flow channel structure 21 and the second flow channel structure 22 are spaced apart. That is, the first flow channel structure 21 and the second flow channel structure 22 are spaced apart in the length direction of the battery cell. Specifically, two first flow channel structures 21 may be adjacent and spaced apart, or two second flow channel structures 22 may be adjacent and spaced apart, or the first flow channel structure 21 and the second flow channel structure 22 may be adjacent and spaced apart, which is specifically related to positions of the terminal-pole region and the non-terminal-pole region of the battery cell in the battery set 40.

In this case, the cooling assembly may further include a heat-conducting plate 23. The heat-conducting plate 23 is connected between two adjacent flow channel structures in one or more first flow channel structures 21 and one or more second flow channel structures 22. Specifically, the heat-conducting plate 23 may be connected between the first flow channel structure 21 and the second flow channel structure 22, the heat-conducting plate 23 may be connected between two first flow channel structures 21, or the heat-conducting plate 23 may be connected between two second flow channel structures 22. By making the heat-conducting plate 23 connected between two adjacent flow channel structures, cold energy of a refrigerant in the flow channel structure is transferred to other regions, so that uniform heat dissipation is performed on the battery set 40. In other embodiments, the heat-conducting plate 23 may not be needed, but heat dissipation is performed on each region of the battery set 40 in a manner in which flow channel structures are arranged adjacently.

In some embodiments, the cooling assembly includes at least two unit regions, each of the unit regions is configured to correspond to one battery set 40 and perform heat exchange on the one battery set 40, and the unit region includes the first flow channel structure 21 and the second flow channel structure 22; and the at least two unit regions are arranged in the length direction of the battery cell. That is, the cooling assembly is provided with one unit region for each battery set 40 in the at least two battery sets 40, and each unit region is configured to perform heat exchange on the corresponding one battery set 40. The first flow channel structure 21 and the second flow channel structure 22 mentioned above are provided in the unit region to perform refrigerant transfer. In addition, the unit regions are arranged in the length direction of the battery cell, that is, an arrangement manner of the unit regions is the same as an arrangement manner of the battery sets 40, thereby implementing corresponding arrangement between the unit regions and the corresponding battery sets 40.

For example, the first flow channel structure 21 and the second flow channel structure 22 may be arranged in at least two unit regions, and the at least two unit regions are arranged in the length direction of the battery cell, that is, the at least two unit regions are arranged in the second direction, and each unit region is configured to perform heat exchange on the battery set 40. That is, each unit region serves as an independent heat dissipation region and can perform heat exchange on the battery set 40.

When flow channel structures in each unit region are provided, various manners may be used. For example, in some manners, only the first flow channel structure 21 and the second flow channel structure 22 may be used as a heat-conducting structure for heat exchange with the battery set 40 in the unit region. In this case, a plurality of flow channels arranged side by side may be used as a whole first flow channel structure 21 or second flow channel structure 22, and the first flow channel structure 21 and the second flow channel structure 22 are disposed adjacent to each other. In some embodiments, the first flow channel structure 21 and the second flow channel structure 22 may be spaced apart, and the manner of the heat-conducting plate 23 shown above may be used.

For example, referring to FIG. 1 and FIG. 2, each unit region includes at least two flow channel structures and at least one heat-conducting plate 23. The at least two flow channel structures are spaced apart in the second direction perpendicular to the first direction, that is, each flow channel structure is arranged between the first side and the second side of the cooling assembly, a first end of each flow channel structure is located on the first side of the cooling assembly, and a second end of each flow channel structure is located on the second side of the cooling assembly. Different flow channel structures are spaced apart in the second direction, so that a gap is left between two adjacent flow channel structures to provide the heat-conducting plate 23 in the space between two adjacent flow channel structures, thereby performing temperature equalization on heat energy or cold energy emitted by the two flow channel structures. The at least two flow channel structures may be classified into the first flow channel structure 21 and the second flow channel structure 22 according to a flow channel direction of the refrigerant. Each unit region includes at least one first flow channel structure 21 and at least one second flow channel structure 22.

Referring to FIG. 1 and FIG. 2, two adjacent flow channel structures can be separated by using a heat-conducting plate 23, so that heat energy or cold energy of the refrigerant in the flow channel structure is diffused to an entire cooling assembly region through the heat-conducting plate 23. When the heat-conducting plate 23 is provided, various manners may be used. For example, a vapor chamber may be used as the heat-conducting plate 23 to improve uniformity of cooling or heat dissipation of the cooling assembly. The material of the heat-conducting plate 23 may use any material with a thermal conductivity greater than a specific threshold, so as to ensure a heat conduction effect of the heat-conducting plate 23.

When the first flow channel structure 21 and the second flow channel structure 22 are arranged, referring to FIG. 4 and FIG. 5, the first flow channel structure 21 needs to be configured to dissipate heat for the non-terminal-pole region of the battery set 40, and the second flow channel structure 22 needs to be configured to dissipate heat for the terminal-pole region of the battery set 40. For example, the first flow channel structure 21 may be disposed at a position close to the non-terminal-pole region of the battery set 40, and the second flow channel structure 22 is disposed at a position close to the terminal-pole region of the battery set 40. The refrigerant flowing from the liquid inlet manifold into the first flow channel structure 21 first cools a non-terminal-pole region of a battery set 40 that is relatively close to the first flow channel structure 21, and then the refrigerant flows into the second flow channel structure 22 through the connecting manifold 13 and cools a terminal-pole region of a battery set 40 that is relatively close to the second flow channel structure 22, so that the first flow channel structure 21 dissipates heat for the non-terminal-pole region of the battery set 40, whereas the second flow channel structure 22 dissipates heat for the terminal-pole region of the battery set 40.

It will be understood that, when the first flow channel structure 21 dissipates heat for the non-terminal-pole region of the battery set 40, cold energy carried by the refrigerant may be directly heat-exchanged with the non-terminal-pole region of the battery set 40 through the first flow channel structure 21, or cold energy carried by the refrigerant may be heat-exchanged with the non-terminal-pole region of the battery set 40 through the first flow channel structure 21 and the heat-conducting plate 23 connected to the first flow channel structure 21. When the second flow channel structure 22 dissipates heat for the terminal-pole region of the battery set 40, cold energy carried by the refrigerant may be directly heat-exchanged with the terminal-pole region of the battery set 40 through the second flow channel structure 22, or cold energy carried by the refrigerant may be heat-exchanged with the terminal-pole region of the battery set 40 through the second flow channel structure 22 and the heat-conducting plate 23 connected to the second flow channel structure 22.

In some embodiments, a sequence of arranging the first flow channel structure 21 and the second flow channel structure 22 may be adjusted according to a position of the terminal-pole region of the battery set 40, so as to ensure that the non-terminal-pole region of the battery set 40 is disposed opposite to the first flow channel structure 21 or a heat-conducting plate 23 connected to the first flow channel structure 21, so that a refrigerant flowing in the first flow channel structure 21 is configured to be heat-exchanged with the non-terminal-pole region of the battery set 40, thereby minimizing a distance between the first flow channel structure 21 and the non-terminal-pole region of the battery set 40, and improving a heat dissipation effect of the first flow channel structure 21 on the non-terminal-pole region of the battery set 40. It can also be ensured that the terminal-pole region of the battery set 40 is disposed opposite to the second flow channel structure 22 or a heat-conducting plate 23 connected to the second flow channel structure 22, so that a refrigerant flowing in the second flow channel structure 22 is configured to be heat-exchanged with the terminal-pole region of the battery set 40, thereby minimizing a distance between the second flow channel structure 22 and the terminal-pole region of the battery set 40, and improving a heat dissipation effect of the second flow channel structure 22 on the terminal-pole region of the battery set 40.

When a quantity of first flow channel structures 21 in each unit region is chosen, the quantity of first flow channel structures 21 may be at least one, such as one, two, three, or four. Each first flow channel structure 21 has a first end and a second end that are opposite. The first end of each first flow channel structure 21 serves as a liquid inlet and is in communication with the liquid inlet manifold, and the second end of the first flow channel structure 21 serves as a liquid outlet and is in communication with the connecting manifold 13, so that a refrigerant in the first flow channel structure 21 can flow from the first end of the first flow channel structure 21 to the second end of the first flow channel structure 21, and flow into the connecting manifold 13. When each first flow channel structure 21 is provided, each first flow channel structure 21 may include a plurality of flow channels that are arranged side by side and separated, and each flow channel is in communication from the first end of the first flow channel structure 21 to the second end of the first flow channel structure 21.

When a quantity of second flow channel structures 22 in each unit region is chosen, the quantity of second flow channel structures 22 may be at least one, such as one, two, three, or four. Each second flow channel structure 22 has a first end and a second end that are opposite. The first end of each second flow channel structure 22 serves as a liquid outlet and is in communication with the liquid outlet manifold 14, and the second end of the second flow channel structure 22 serves as a liquid inlet and is in communication with the connecting manifold 13, so that a refrigerant in the second flow channel structure 22 can flow from the second end of the second flow channel structure 22 to the first end of the second flow channel structure 22, and flow into the liquid outlet manifold 14. When each second flow channel structure 22 is provided, each second flow channel structure 22 may include a plurality of flow channels that are arranged side by side and separated, and each flow channel is in communication from the first end of the second flow channel structure 22 to the second end of the second flow channel structure 22.

When a quantity of unit regions is chosen, the quantity of unit regions may be one, two, or more than two, and each unit region is configured to perform heat exchange on the battery set 40. Specifically, each unit region may perform heat exchange on a row of battery sets 40, and the row of battery sets 40 may be disposed at a position above or below and opposite to the unit region. Each unit region may alternatively perform heat exchange on two rows of battery sets 40, and the two rows of battery sets 40 are respectively disposed at opposite positions above and below the unit region. In this way, each unit region performs heat exchange on the corresponding battery set 40 for cooling.

When the quantity of unit regions is at least two, referring to FIG. 1, the at least two unit regions are arranged in the second direction. That is, an arrangement direction of the unit regions is the same as the arrangement direction of the flow channel structures and the heat-conducting plates 23, and both are arranged in the length direction of the battery cell in the battery set 40.

For example, referring to FIG. 1 and FIG. 2, two adjacent unit regions may be separated by using a first heat insulation plate 24, so as to prevent thermal interference between different unit regions, and enable different unit regions to perform independent thermal management. When the first heat insulation plate 24 is provided, a material with a thermal conductivity less than a specific threshold may be used, such as but not limited to a heat insulation foam. In some embodiments, the first heat insulation plate 24 may be provided with a connecting portion 26, and the connecting portion 26 is configured to be connected to a baffle. The baffle is configured to separate two adjacent unit regions, so that two adjacent battery sets 40 can be separated to prevent mutual interference between different battery sets 40. The connecting portion 26 may be provided in various manners. For example, a threaded connecting hole may be used as the connecting portion 26. At least two connecting portions 26 are provided on the first heat insulation plate 24, so as to improve reliability of connection to the baffle.

In some embodiments, the cooling assembly may further include a liquid inlet manifold, a liquid outlet manifold 14, and a connecting manifold 13. A flow channel direction of the refrigerant in the heat-conducting structure is specifically related to a communication manner of the liquid inlet manifold and the liquid outlet manifold 14. For example, the liquid inlet manifold is in communication with the liquid inlet of the first flow channel structure 21; the liquid outlet manifold 14 is in communication with the liquid outlet of the second flow channel structure 22; and the connecting manifold 13 is in communication between the liquid outlet of the first flow channel structure 21 and the liquid inlet of the second flow channel structure 22. That is, the liquid inlet manifold and the liquid outlet manifold 14 are disposed on a same side of the cooling assembly to reduce a spacing between the liquid inlet manifold and the liquid outlet manifold 14, so that heat exchange can be performed between the liquid outlet manifold 14 and the liquid inlet manifold, thereby reducing a temperature at a position of the liquid outlet manifold 14. In a specific arrangement, a first end of each first flow channel structure 21 may be used as a liquid inlet and is in communication with the liquid inlet manifold; a second end of each first flow channel structure 21 is used as a liquid outlet and is in communication with the connecting manifold 13; a first end of each second flow channel structure 22 is used as a liquid outlet and is in communication with the liquid outlet manifold 14; and a second end of each second flow channel structure 22 is used as a liquid inlet and is in communication with the connecting manifold 13. Therefore, flow channel directions of the refrigerant in the first flow channel structure 21 and the second flow channel structure 22 are enabled to be opposite. Certainly, in other manners, the liquid inlet manifold and the liquid outlet manifold 14 may be disposed at different positions.

Referring to FIG. 1, FIG. 2, and FIG. 4, the liquid inlet manifold is configured to make the refrigerant flowing into the cooling assembly flow into all the first flow channel structures 21, and the liquid outlet manifold 14 is configured to converge the refrigerant flowing out of the second flow channel structure 22 and then make the refrigerant flow out of the cooling assembly. For example, the liquid inlet manifold may use a rigid tube, so that a harmonica tube can be fixed. The liquid inlet manifold is disposed on the first side of the cooling assembly. For example, the liquid inlet manifold may be disposed on the first side of the cooling assembly in the second direction, that is, an extension direction of the liquid inlet manifold is parallel to the length direction of the battery cell. The liquid inlet manifold is in communication with the first end of the first flow channel structure 21, so that the refrigerant can flow into the first flow channel structure 21 through the liquid inlet manifold, that is, the liquid inlet manifold plays a role in flow split.

When the liquid inlet manifold is provided, referring to FIG. 1, FIG. 2, and FIG. 3, the liquid inlet manifold is in communication with the liquid inlet of the first flow channel structure 21 in the unit region. For example, the liquid inlet manifold may be in communication with first ends of the first flow channel structures 21 in all the unit regions. In addition, the liquid inlet manifold is in communication with a liquid inlet interface 16 on the cooling assembly, so that the refrigerant flowing in through the liquid inlet interface 16 can flow into the first flow channel structures 21 through the liquid inlet manifold, thereby implementing flow split.

In some embodiments, an arrangement manner of the liquid inlet manifold may further be related to the quantity of unit regions. For example, no matter whether the quantity of unit regions is one or more, one liquid inlet manifold may be provided, and the liquid inlet manifold is in communication with liquid inlets of all the first flow channel structures 21. For example, the liquid inlet manifold is in communication with first ends of all the first flow channel structures 21. In addition, the liquid inlet manifold is further in communication with the liquid inlet interface 16 on the cooling assembly, and the refrigerant flowing in from the liquid inlet interface 16 directly flows into the first flow channel structures 21 through the liquid inlet manifold. In this case, an input port of the liquid inlet manifold may be disposed at a middle position or a slightly off-center position of the liquid inlet manifold, so that the refrigerant can flow into the first flow channel structures 21 as evenly as possible.

For example, when the quantity of unit regions is two or more than two, an arrangement manner of a graded liquid inlet manifold may be used. For example, referring to FIG. 1, FIG. 2, and FIG. 3, the liquid inlet manifold may include at least two first liquid inlet manifolds 11, and each of the first liquid inlet manifolds 11 corresponds to one unit region and is in communication with the liquid inlet of the first flow channel structure 21 in the one unit region. That is, at least two first liquid inlet manifolds 11 are in a one-to-one correspondence with at least two unit regions, and each first liquid inlet manifold 11 is in communication with the liquid inlet of the first flow channel structure 21 in the corresponding unit region. For example, each first liquid inlet manifold 11 is in communication with first ends of all the first flow channel structures 21 in the corresponding unit region. That is, one first liquid inlet manifold 11 is correspondingly provided in each unit region, and the first end of the first flow channel structure 21 in each unit region is in communication with a same first liquid inlet manifold 11. First flow channel structures 21 in different unit regions are in communication with different first liquid inlet manifolds 11, thereby facilitating adjustment of a flow rate of the refrigerant in different unit regions. For example, for the first liquid inlet manifold 11 corresponding to each unit region, the input port of the first liquid inlet manifold 11 may be disposed in the middle or a slightly off-center position of the first liquid inlet manifold 11, so that the refrigerant in each unit region flows into all the first flow channel structures 21 in a same unit region as evenly as possible.

In some embodiments, referring to FIG. 1, FIG. 2, and FIG. 3, the liquid inlet manifold may further include a second liquid inlet manifold 12, and the second liquid inlet manifold 12 is in communication with the first liquid inlet manifold 11. For example, the second liquid inlet manifold 12 may be in communication with all the first liquid inlet manifolds 11. The second liquid inlet manifold 12 may be in communication with the liquid inlet interface 16 on the cooling assembly, so that the refrigerant flowing in from the liquid inlet interface 16 flows into the first liquid inlet manifolds 11 through the second liquid inlet manifold 12, and then flows into the first flow channel structures 21 in respective unit regions through respective first liquid inlet manifolds 11.

In the related technologies, the quantity of inlet flow splits in the cooling assembly is small and theflow split procedure is short, resulting in uneven flow distribution in each branch. This, combined with influence of cooling direction, leads to large cooling differences in different regions of the cooling assembly and large temperature differences in the battery cells. In some embodiments of this application, in a process in which the refrigerant enters each unit region, long-distance flow split is performed for a plurality of times, and branch procedures are the same, thereby ensuring even flow distribution across all the branches. For example, as can be seen from FIG. 1 and FIG. 2, the refrigerant is first split into two branches, and then split into four branches, and a flow rate in the harmonica tube is 1/4 of a flow rate at the liquid inlet interface 16, so as to ensure that flow rates of all the branches are evenly distributed.

Certainly, a manner in which the liquid inlet interface 16 is in communication with the first liquid inlet manifold 11 is not limited to the manner shown above. Besides, other manners may be used. For example, in some embodiments, each first liquid inlet manifold 11 may be in communication with the liquid inlet interface 16 through a separate connecting tube.

For example, referring to FIG. 1 and FIG. 2, the connecting manifold 13 may be disposed on the second side of the cooling assembly, and the second side and the first side are two opposite sides of the cooling assembly in the first direction, that is, the battery set 40 is disposed between the first side and the second side. The connecting manifold 13 is in communication with the liquid outlet of the first flow channel structure 21 and the liquid inlet of the second flow channel structure 22, that is, the refrigerant flowing out of the first flow channel structure 21 flows into the second flow channel structure 22 through the connecting manifold 13. For example, the connecting manifold 13 is in communication with second ends of the first flow channel structure 21 and the second flow channel structure 22, so that the refrigerant flowing in from the first end of the first flow channel structure 21 flows into the second end of the first flow channel structure 21, and then flows into the second end of the second flow channel structure 22 through the connecting manifold 13, thereby implementing the refrigerant's diversion at the second side of the cooling assembly. For example, the connecting manifold 13 may use a rigid tube, so that a harmonica tube can be fixed. In some embodiments, the connecting manifold 13 may be placed horizontally on the second side of the cooling assembly in the second direction, that is, an extension direction of the connecting manifold 13 is parallel to the length direction of the battery cell.

For example, no matter whether the quantity of unit regions is one or at least two, the connecting manifold 13 may be a tube member in communication from one end to the other end, and second ends of all the first flow channel structures 21 and all the second flow channel structures 22 are in communication with the connecting manifold 13.

In some embodiments, when the quantity of unit regions is at least two, the connecting manifold 13 may include at least two connecting manifold segments, and different connecting manifold segments are not in communication with each other, and different connecting manifold segments can be separated by a partition (not shown in the figure) disposed in the connecting manifold 13, so that the refrigerant cannot flow between different connecting manifold segments. Each unit region corresponds to one connecting manifold segment, and both the liquid outlet of the first flow channel structure 21 and the liquid inlet of the second flow channel structure 22 in each unit region are in communication with a corresponding connecting manifold segment. That is, the at least two connecting manifold segments may be in a one-to-one correspondence with at least two unit regions, and second ends of the first flow channel structure 21 and the second flow channel structure 22 in each unit region are both in communication with a corresponding connecting manifold segment. Harmonica tubes in different unit regions cannot be in communication through the connecting manifold 13, so that refrigerants in different unit regions are isolated from each other and do not interfere with each other.

For example, referring to FIG. 1, FIG. 2, FIG. 4, and FIG. 5, the liquid outlet manifold 14 may be disposed on the first side of the cooling assembly, and the liquid outlet manifold 14 is in communication with the liquid outlet of the second flow channel structure 22. For example, the liquid outlet manifold 14 is in communication with the first end of the second flow channel structure 22, so that the refrigerant in the second flow channel structure 22 can flow from the connecting manifold 13 into the liquid outlet manifold 14, and the liquid outlet manifold 14 plays a role in converging. For example, the liquid outlet manifold 14 may use a rigid tube, so that a harmonica tube can be fixed. For example, the liquid outlet manifold 14 may be disposed on the first side of the cooling assembly in the second direction, that is, an extension direction of the liquid outlet manifold 14 is parallel to the length direction of the battery cell.

In some embodiments, the liquid inlet manifold and the liquid outlet manifold 14 may be disposed in an up-and-down stacked manner, thereby improving compactness of manifold arrangement. When the liquid outlet manifold 14 of the cooling assembly is overheated, passive temperature equalization may be performed through the liquid inlet manifold, which helps to reduce a temperature at a position of the liquid outlet manifold 14 and reduce a temperature difference in the battery pack.

For example, no matter whether the quantity of unit regions is one or at least two, the liquid outlet manifold 14 may be a tube member in communication from one end to the other end, and the liquid outlet manifold 14 is in communication with first ends of all the second flow channel structures 22, so that refrigerants in all the second flow channel structures 22 flow into the liquid outlet manifold 14 and then flow out.

In some embodiments, when the quantity of unit regions is at least two, the liquid outlet manifold 14 may use a graded convergence manner. For example, the liquid outlet manifold 14 may include at least two first liquid outlet manifolds 14, one first liquid outlet manifold is correspondingly provided in each unit region, and second ends of all the second flow channel structures 22 in a same unit region are in communication with a same first liquid outlet manifold, thereby reducing mutual interference between different unit regions. Then, the refrigerant in the first liquid outlet manifold is discharged through a liquid outlet interface 17. For example, the liquid outlet manifold 14 may further include a second liquid outlet manifold, where the second liquid outlet manifold is in communication with all the first liquid outlet manifolds, and the second liquid outlet manifold is further in communication with the liquid outlet interface 17, so as to implement graded convergence, improve uniformity of refrigerant flow rate between different unit regions, and improve uniformity of heat dissipation effect.

Referring to FIG. 1, FIG. 4, and FIG. 5, the refrigerant may flow into the cooling assembly through the liquid inlet interface 16, and the refrigerant may flow out of the cooling assembly through the liquid outlet interface 17. That is, the liquid inlet interface 16 and the liquid outlet interface 17 serve as interfaces of the cooling assembly in communication with an external refrigerant circulation system, allowing the refrigerant to flow into or out of the cooling assembly. For example, a refrigerant connector 15 may be provided on the cooling assembly, and the refrigerant connector 15 is configured to be disposed on a battery box, and the liquid inlet interface 16 and the liquid outlet interface 17 may be provided on the refrigerant connector 15, so that the external refrigerant circulation system is in communication with the cooling assembly in the battery box. For example, the liquid inlet interface 16 and the liquid outlet interface 17 may be disposed side by side on the refrigerant connector 15 in an up-down or left-right direction, so that a spacing between the two interfaces is as small as possible, thereby reducing a volume of the refrigerant connector 15. For example, an opening may be formed on the battery box, and the refrigerant connector 15 is disposed at a position of the opening. For example, a sealing ring may be provided on the refrigerant connector 15, and the sealing ring surrounds the liquid inlet interface 16 and the liquid outlet interface 17, so as to implement sealing connection between the refrigerant connector 15 and the external refrigerant circulation system.

For example, referring to FIG. 1, FIG. 2, and FIG. 3, an input port is provided on the liquid inlet manifold. The refrigerant flowing in from the liquid inlet interface 16 of the refrigerant connector 15 can flow into the liquid inlet manifold through the input port on the liquid inlet manifold, and flow into the first flow channel structure 21 through the liquid inlet manifold. For example, the input port on the liquid inlet manifold may be in communication with the liquid inlet interface 16 through a liquid inlet flexible tube 18. The liquid inlet flexible tube 18 is connected between the liquid inlet interface 16 of the refrigerant connector 15 and the input port on the liquid inlet manifold, which facilitates communication between the liquid inlet interface 16 of the refrigerant connector 15 and the liquid inlet manifold, improves assembly feasibility, increases flexibility and operability, and reduces costs. For example, the liquid inlet flexible tube 18 may be an air conditioning rubber hose structure. The liquid inlet flexible tube 18 may be provided with cable ties to ensure that the liquid inlet flexible tube 18 can be effectively fixed after being assembled into an entire pack, thereby resolving a problem of structural failure caused by flexible vibration of the liquid inlet flexible tube 18 under a durable working condition such as vibration. For example, a soft-hard connecting joint may be provided at the input port of the liquid inlet manifold, one end of the soft-hard connecting joint is connected to the liquid inlet manifold, and the other end is connected to the liquid inlet flexible tube 18. It will be understood that, a communication manner between the input port of the liquid inlet manifold and the liquid inlet interface 16 is not limited to the communication manner shown above using the liquid inlet flexible tube 18. Besides, other manners may be used. For example, a rigid tube may be used to communicate the liquid inlet interface 16 of the refrigerant connector 15 with the input port of the liquid inlet manifold.

For example, referring to FIG. 1, FIG. 2, and FIG. 3, an output port is provided on the liquid outlet manifold 14. After the refrigerant in the second flow channel structure 22 of the cooling assembly flows into the liquid outlet manifold 14, the refrigerant flows out through the output port on the liquid outlet manifold 14, and finally flows out of the cooling assembly through the liquid outlet interface 17 on the refrigerant connector 15. For example, the output port on the liquid outlet manifold 14 may be in communication with the liquid outlet interface 17 through a liquid outlet flexible tube 19. The liquid outlet flexible tube 19 is connected between the liquid outlet interface 17 of the refrigerant connector 15 and the input port on the liquid outlet manifold 14, which facilitates communication between the liquid outlet interface 17 of the refrigerant connector 15 and the liquid outlet manifold 14, improves assembly feasibility, increases flexibility and operability, and reduces costs. For example, the liquid outlet flexible tube 19 may be an air conditioning rubber hose structure. The liquid outlet flexible tube 19 may be provided with cable ties to ensure that the liquid outlet flexible tube 19 can be effectively fixed after being assembled into the entire pack, thereby resolving a problem of structural failure caused by flexible vibration of the liquid outlet flexible tube 19 under a durable working condition such as vibration. For example, a soft-hard connecting joint may be provided at the output port of the liquid outlet manifold 14, one end of the soft-hard connecting joint is connected to the liquid outlet manifold 14, and the other end is connected to the liquid outlet flexible tube 19. It will be understood that, a communication manner between the output port of the liquid outlet manifold 14 and the liquid outlet interface 17 is not limited to the communication manner shown above using the liquid outlet flexible tube 19. Besides, other manners may be used. For example, a rigid tube may be used to communicate the liquid outlet interface 17 of the refrigerant connector 15 with the output port of the liquid outlet manifold 14.

For example, referring to FIG. 4 and FIG. 5, two opposite ends of the battery set 40 in the second direction are each provided with a terminal-pole region. For example, the battery set 40 includes a row of battery cells arranged sequentially in the first direction, that is, the row of battery cells is arranged sequentially from the first side of the cooling assembly to the second side of the cooling assembly. Two opposite ends of each battery cell in the second direction are each provided with a terminal-pole, so that two opposite ends of the battery set 40 in the second direction are each provided with a terminal-pole region. The battery set 40 may use manners such as, but not limited to, a battery module and a CTP assembly manner. For example, when the battery set 40 is in a form of the battery module, a bottom plate 41 in the battery module may be opposite to a corresponding unit region, and heat exchange can be performed therebetween.

For example, referring to FIG. 2, each of the unit regions includes a first flow channel structure 21 and two second flow channel structures 22, and the first flow channel structure 21 is located between the two second flow channel structures 22. When two opposite ends of the battery set 40 in the second direction are each provided with a terminal-pole region, the two second flow channel structures 22 respectively perform heat exchange on the two terminal-pole regions. The first flow channel structure 21 located between the two second flow channel structures 22 is configured to dissipate heat for a non-terminal-pole region at a middle position of the battery set 40.

For example, still referring to FIG. 2, each of the unit regions may include two first flow channel structures 21 and two second flow channel structures 22, and the two first flow channel structures 21 are located between the two second flow channel structures 22. If a length of the battery cell in the battery set 40 is relatively large, a width of the non-terminal-pole region in the battery set 40 in the length direction of the battery cell is also relatively large. In this case, two first flow channel structures 21 may be provided to ensure uniformity of heat dissipation of the non-terminal-pole region in the battery set 40.

For example, referring to FIG. 2, each unit region may be divided into one first heat dissipation region 31 and two second heat dissipation regions 32. At least one first flow channel structure 21 is provided in the first heat dissipation region 31, and at least one second flow channel structure 22 is provided in each second heat dissipation region 32. One first heat dissipation region 31 is located between two second heat dissipation regions 32. That is, the two second heat dissipation regions 32 are respectively disposed on two opposite sides of the corresponding unit region in the second direction, and the first heat dissipation region 31 is disposed between the two second heat dissipation regions 32, so that the one first heat dissipation region 31 and the two second heat dissipation regions 32 are arranged alternately in the second direction. The first heat dissipation region 31 is configured to dissipate heat for the non-terminal-pole region of the battery set 40, and the second heat dissipation region 32 is configured to dissipate heat for the terminal-pole region of the battery set 40. For example, for each unit region, the second flow channel structure 22 is disposed on two opposite sides of the unit region in the second direction, the first flow channel structure 21 is disposed between the second flow channel structures 22 on two sides, and different flow channel structures are spaced apart and separated by the heat-conducting plate 23. In this way, the refrigerant flowing in the first flow channel structure 21 is configured to be heat-exchanged with the non-terminal-pole region (a region other than the terminal-pole region) of the battery set 40, and the refrigerant flowing in the second flow channel structure 22 is configured to be heat-exchanged with the terminal-pole region of the battery set 40. Therefore, when cooling is performed, the refrigerant first flows through the low-temperature region of the non-terminal-pole region of the battery set 40, and then flows through the high-temperature region of the terminal-pole region of the battery set 40, so that refrigerants in different flow channel structures always maintain a relatively high cooling efficiency, thereby improving a heat dissipation effect. By using a refrigerant flow mode in which the low-temperature region is first cooled and then the high-temperature region is cooled, a heat dissipation effect on the non-terminal-pole portion of the battery cell in the battery pack is improved.

Certainly, in some embodiments, a terminal-pole region is provided at one end of two opposite ends of the battery set 40 in the second direction (the length direction of the battery cell), and no terminal-pole region is provided at the other end. In this case, both a quantity of first heat dissipation regions 31 and a quantity of second heat dissipation regions 32 may be one. The second heat dissipation region 32 is opposite to the terminal-pole region of the battery set 40, and the first heat dissipation region 31 is opposite to the non-terminal-pole region of the battery set 40.

For example, referring to FIG. 1 and FIG. 2, the cooling assembly may further include two second heat insulation plates 25, and the two second heat insulation plates 25 are respectively disposed on two sides of the cooling assembly in the length direction of the battery cell in the battery set. The two second heat insulation plates 25 are spaced apart, and the first flow channel structure 21 and the second flow channel structure 22 are disposed between the two second heat insulation plates 25. For example, the two second heat insulation plates 25 may be respectively disposed on two sides distributed oppositely of the cooling assembly in the second direction (the length direction of the battery cell), so as to prevent heat transfer between the cooling assembly and an outside world, prevent the outside world from affecting effectiveness of the cooling assembly, and reduce a condensation risk. When the second heat insulation plate 25 is provided, a material with a thermal conductivity less than a specific threshold may be used, such as but not limited to a heat insulation foam. In some embodiments, each second heat insulation plate 25 may be connected to a heat-conducting plate 23 on an outermost side of the cooling assembly in the second direction, so as to facilitate fixing of the second heat insulation plate 25.

For example, referring to FIG. 1 and FIG. 2, the heat-conducting plate 23 may be provided with a support block 27, and the support block 27 is configured to support the battery set 40. When the battery set 40 is placed on the cooling assembly, the support block 27 supports the battery set 40, so that no mutual compression occurs between the flow channel structure and the battery set 40. In a specific arrangement, the support block 27 is higher than the first flow channel structure 21 and the second flow channel structure 22, that is, the support block 27 is protruding relative to the first flow channel structure 21 and the second flow channel structure 22. The support block 27 may be disposed on the heat-conducting plate 23 in a manner such as but not limited to brazing, screw fastening, or integrated molding. Therefore, when the battery set 40 is placed on the unit region of the cooling assembly, the support block 27 on the cooling assembly supports the battery set 40, and the flow channel structure is not in contact with the battery set 40. A weight of the upper-layer battery set 40 does not act on the flow channel structure, so as to prevent the battery set 40 from crushing the flow channel structure, thereby resolving a risk that the flow channel structure is easily crushed. The support block 27 may use a material with a relatively high thermal conductivity, so as to improve heat exchange capability between the battery set 40 and the cooling assembly. When an upper side and a lower side of the cooling assembly are each provided with a battery set 40, an upper side and a lower side of the heat-conducting plate 23 can each be provided with a support block 27, so as to separate the flow channel structure from the battery set 40 and prevent damage to the flow channel structure. For example, one or more support blocks 27 may be provided on each heat-conducting plate 23.

In some embodiments, referring to FIG. 1, FIG. 2, and FIG. 5, when the cooling assembly further includes a heat-conducting plate 23, and the heat-conducting plate 23 is connected between two adjacent flow channel structures in one or more first flow channel structures 21 and one or more second flow channel structures 22, each heat-conducting plate 23 may be connected to the liquid outlet manifold 14, the liquid inlet manifold, or the connecting manifold 13 through a connecting block 28, thereby facilitating fixing of the heat-conducting plate 23. For example, the connecting block 28 may be further configured to support the battery set 40, that is, the connecting block 28 can support two end portions of the battery set 40. In a specific arrangement, the connecting block 28 is higher than the first flow channel structure 21 and the second flow channel structure 22, that is, the connecting block 28 is protruding relative to the first flow channel structure 21 and the second flow channel structure 22, so that the battery set 40 can be separated from the flow channel structure, thereby preventing damage to the flow channel structure.

In some embodiments, a limiting end face 29 may be provided on a side of the connecting block 28 toward the battery set 40, and the limiting end face 29 is configured to abut against a side face of the battery set 40 in the arrangement direction of the battery cells. The battery set 40 has two opposite side faces in the arrangement direction of the battery cells (that is, the second direction). When the battery set 40 is assembled on the cooling assembly, the limiting end face 29 can abut against one side face in two side faces of the battery set in the arrangement direction of the battery cells, so as to limit the battery set 40 and prevent the battery set 40 from sliding in the second direction. Therefore, when the battery set 40 is assembled on the cooling assembly, or the cooling assembly is assembled on the battery set 40, a position relationship between the cooling assembly and the battery set 40 can be maintained by using the limiting end face 29, so as to ensure that the cooling assembly does not move relative to the battery set 40, thereby facilitating fixing of the battery set 40 or the cooling assembly. When the limiting end face 29 is provided, one limiting end face 29 may be provided on each of two connecting blocks 28 that are opposite in the first direction, and the limiting end faces 29 on the two connecting blocks 28 that are opposite are disposed opposite to each other to limit assembly space of the battery set 40, thereby facilitating limiting of a positional relationship between the battery set 40 and the cooling assembly.

For example, an insulating film may be provided on a surface of the cooling assembly. By covering the surface of the cooling assembly with the insulating film, an electrical defect is prevented between the cooling assembly and the battery set 40, thereby reducing a risk of high-voltage electrical safety.

In various implementations shown above, the liquid outlet of the first flow channel structure 21 is configured to be in communication with the liquid inlet of the second flow channel structure 22; and the first flow channel structure 21 is configured to dissipate heat for the non-terminal-pole region of the battery set 40, and the second flow channel structure 22 is configured to dissipate heat for the terminal-pole region of the battery set 40. Therefore, a refrigerant first flows into the first flow channel structure 21 and performs cooling on a low-temperature region of the non-terminal-pole region of the battery set 40, and then flows into the second flow channel structure 22 and performs cooling on a high-temperature region of the terminal-pole region of the battery set 40. By using a refrigerant flow mode in which the low-temperature region is first cooled and then the high-temperature region is cooled, a heat dissipation effect on the non-terminal-pole portion of the battery cell in the battery pack is improved, a temperature of the non-terminal-pole portion of the battery cell is reduced, and a problem of expansion of the non-terminal-pole portion of the battery cell due to excessive temperature is avoided.

Furthermore, an embodiment of this application further provides a battery pack. Referring to FIG. 1, FIG. 2, and FIG. 4, the battery pack includes a battery set 40 and any of the foregoing cooling assemblies. Referring to FIG. 4 and FIG. 5, the first flow channel structure 21 is configured to dissipate heat for a non-terminal-pole region of the battery set 40, and the second flow channel structure 22 is configured to dissipate heat for a terminal-pole region of the battery set 40.

For example, the battery set 40 may include a terminal-pole region and a non-terminal-pole region, and the terminal-pole region and the non-terminal-pole region are arranged in a length direction of a battery cell in the battery set 40. For a specific arrangement manner, reference may be made to the description of the foregoing part. The terminal-pole region is disposed at at least one end of the battery set 40. Specifically, the terminal-pole region may be disposed at one end of the battery set 40, or may be disposed at two ends of the battery set 40. For a specific arrangement manner, reference is made to the description of the foregoing part.

In addition, the terminal-pole region accounts for 2% to 25% of a length of the battery cell in the battery set, and the non-terminal-pole region accounts for 50% to 96% of the length of the battery cell. When the terminal-pole region and the non-terminal-pole region of the battery set 40 are determined, the terminal-pole region of the battery set 40 may account for 2% to 25% of a length of the battery cell, and the non-terminal-pole region of the battery set 40 may account for 50% to 96% of the length of the battery cell. Specifically, the terminal-pole region of the battery set 40 may account for any value between 2% and 25% of the length of the battery cell, such as 2%, 5%, 8%, 10%, 13%, 15%, 18%, 20%, or 25%. The non-terminal-pole region of the battery set 40 may account for any value between 50% and 96% of the length of the battery cell, such as 50%, 55%, 60%, 65%, 70%, 75%, 80%, 85%, 90%, 95%, 60%, or 96%. For example, the terminal-pole region may account for 10% of the length of the battery cell, and the battery cell has two terminal-pole regions, which are respectively located at two ends of an extension direction of the battery cell, and the non-terminal-pole region accounts for 80% of the length of the battery cell.

It should be explained that the terminal-pole region of the battery set 40 refers to positions of end portions at which poles of all the battery cells in the battery set 40 are located. The terminal-pole region of the battery set 40 not only refers to a terminal-pole surface of the battery set 40, but also includes a preset length that extends from the terminal-pole surface of the battery set 40 toward an interior of the battery set 40. A size of the preset length is specifically related to a length of a terminal-pole in the battery set 40. That is, the terminal-pole in the battery cell not only refers to a portion exposed outside the battery set 40, but further includes a portion in the battery cell that is electrically connected to a positive electrode sheet or a negative electrode sheet in the battery cell. In a discharging or charging process of the battery set 40, the terminal-pole region of the battery set 40 generates heat relatively fast, and thus a temperature of the terminal-pole region of the battery set 40 is generally higher than that of the non-terminal-pole region (other portions other than the terminal-pole region) of the battery set 40. In this embodiment of this application, a refrigerant flowing from a liquid inlet manifold into the first flow channel structure 21 first performs cooling on the low-temperature region of the non-terminal-pole region of the battery cell, and then flows into the second flow channel structure 22 through a connecting manifold 13 and performs cooling on the high-temperature region of the terminal-pole region of the battery set 40. By using a refrigerant flow mode in which the low-temperature region is first cooled and then the high-temperature region is cooled, a heat dissipation effect on the non-terminal-pole portion of the battery cell in the battery pack is improved, a temperature of the non-terminal-pole portion of the battery cell is reduced, and a problem of expansion of the non-terminal-pole portion of the battery cell due to excessive temperature is avoided.

For example, the first flow channel structure 21 may be disposed at a position close to the non-terminal-pole region of the battery set 40, and the second flow channel structure 22 is disposed at a position close to the terminal-pole region of the battery set 40. The refrigerant flowing from the liquid inlet manifold into the first flow channel structure 21 first cools a non-terminal-pole region of a battery set 40 that is relatively close to the first flow channel structure 21, and then the refrigerant flows into the second flow channel structure 22 through the connecting manifold 13 and cools a terminal-pole region of a battery set 40 that is relatively close to the second flow channel structure 22, so that the first flow channel structure 21 dissipates heat for the non-terminal-pole region of the battery set 40, whereas the second flow channel structure 22 dissipates heat for the terminal-pole region of the battery set 40.

It should be explained that, when the first flow channel structure 21 dissipates heat for the non-terminal-pole region of the battery set 40, cold energy carried by the refrigerant may be directly heat-exchanged with the non-terminal-pole region of the battery set 40 through the first flow channel structure 21, or cold energy carried by the refrigerant may be heat-exchanged with the non-terminal-pole region of the battery set 40 through the first flow channel structure 21 and the heat-conducting plate 23 connected to the first flow channel structure 21. When the second flow channel structure 22 dissipates heat for the terminal-pole region of the battery set 40, cold energy carried by the refrigerant may be directly heat-exchanged with the terminal-pole region of the battery set 40 through the second flow channel structure 22, or cold energy carried by the refrigerant may be heat-exchanged with the terminal-pole region of the battery set 40 through the second flow channel structure 22 and the heat-conducting plate 23 connected to the second flow channel structure 22.

In some embodiments, a sequence of arranging the first flow channel structure 21 and the second flow channel structure 22 may be adjusted according to a position of the terminal-pole region of the battery set 40, so as to ensure that the non-terminal-pole region of the battery set 40 is disposed opposite to the first flow channel structure 21 or a heat-conducting plate 23 connected to the first flow channel structure 21, so that a refrigerant flowing in the first flow channel structure 21 is configured to be heat-exchanged with the non-terminal-pole region of the battery set 40, thereby minimizing a distance between the first flow channel structure 21 and the non-terminal-pole region of the battery set 40, and improving a heat dissipation effect of the first flow channel structure 21 on the non-terminal-pole region of the battery set 40. It can also be ensured that the terminal-pole region of the battery set 40 is disposed opposite to the second flow channel structure 22 or a heat-conducting plate 23 connected to the second flow channel structure 22, so that a refrigerant flowing in the second flow channel structure 22 is configured to be heat-exchanged with the terminal-pole region of the battery set 40, thereby minimizing a distance between the second flow channel structure 22 and the terminal-pole region of the battery set 40, and improving a heat dissipation effect of the second flow channel structure 22 on the terminal-pole region of the battery set 40.

When the battery set 40 is provided, the battery set 40 includes a plurality of battery cells, and a length direction of each battery cell is parallel to a second direction, that is, the length direction of each battery cell is perpendicular to an extension direction of a flow channel structure. As shown in FIG. 4 and FIG. 5, each row of battery set 40 includes a plurality of battery cells, and the plurality of battery cells are arranged in an extension direction of a flow channel, that is, the plurality of battery cells in each row of battery set 40 are arranged in a straight line in a same first direction.

When a type of each battery cell is selected, for example, each battery cell may be a short battery cell or a long battery cell. It will be understood that the short battery cell and the long battery cell have a definite definition in this field. The short battery cell is a battery cell with a length not exceeding a first preset value, the long battery cell is a battery cell with a length exceeding a second preset value, and the first preset value and the second preset value may be equal or not equal, or even the first preset value may be greater than the second preset value. For example, the length of the short battery cell may be 400 mm to 900 mm, and the length of the long battery cell may be 600 mm to 1200 mm. Referring to FIG. 1, the battery cell may be specifically a short battery cell or a long battery cell with a relatively small thickness, or a rectangular block battery cell with a slightly large thickness. The rectangular block battery cell may be specifically, but is not limited to, a square aluminum-cased battery cell. The battery cell may alternatively be a cylindrical battery cell. Two ends of the battery cell in the second direction (the length direction of the battery cell) are respectively provided with poles of the battery cell, which may be specifically a positive electrode terminal-pole and a negative electrode terminal-pole of the battery cell. The positive electrode terminal-pole and the negative electrode terminal-pole of the battery cell may be respectively disposed at two ends of the battery cell in the second direction. That is, two ends of the battery cell in the second direction are each provided with a terminal-pole, and the terminal-pole may be a positive electrode terminal-pole, or a negative electrode terminal-pole. Certainly, the positive electrode terminal-pole and the negative electrode terminal-pole of the battery cell may alternatively be disposed only at one end of the battery cell in the second direction.

For example, a quantity of layers of the battery set 40 is at least two, each layer includes at least one battery set 40, and the first flow channel structure 21 and the second flow channel structure 22 are located between two adjacent layers of battery sets 40. That is, the first flow channel structure 21 and the second flow channel structure 22 are disposed in a middle portion of the battery pack, and belong to a passive temperature equalization cooling assembly.

In some embodiments, referring to FIG. 4, a stacking direction of the at least two layers of battery sets 40, an arrangement direction of the battery cells in the battery set 40, and the length direction of the battery cell are perpendicular to each other. For example, the stacking direction of the at least two layers of battery sets 40 is a third direction, and the first direction, the second direction, and the third direction are perpendicular to each other.

For example, each layer of battery sets 40 includes at least two battery sets 40 arranged in the length direction of the battery cell, that is, at least two battery sets 40 may exist in the same layer, and the at least two battery sets 40 are arranged side by side in the length direction of the battery cell.

For example, referring to FIG. 4, there are two layers of battery sets 40, and the two layers of battery sets 40 include two rows of battery sets 40. Each battery set 40 includes a row of battery cells, and the battery cells are arranged in the first direction. Two battery sets 40 in the same layer of battery sets 40 are arranged in the second direction perpendicular to the first direction. Two unit regions are provided on the cooling assembly, one battery set 40 is provided above each unit region, and one battery set 40 is provided below each unit region, and each unit region is configured to perform heat exchange on the two battery sets 40.

For example, battery sets 40 above and below the cooling assembly may be bonded to the cooling assembly by using a thermally conductive structural adhesive. Specifically, the battery set 40 below the cooling assembly can implement heat transfer in a height direction through a heat-conducting plate 23 disposed on the cooling assembly. The battery set 40 on the cooling assembly can be in contact with the first flow channel structure 21 or the second flow channel structure 22 through a bottom plate 41 of an upper-layer battery module, thereby implementing temperature equalization and heat transfer in the height direction. For example, a heat transfer path in the height direction may successively be upper-layer battery set 40 → thermally conductive structural adhesive → bottom plate 41 → thermally conductive structural adhesive → harmonica tube → heat-conducting plate 23 → thermally conductive structural adhesive → lower-layer battery set 40.

In addition, this application provides a vehicle. Referring to FIG. 1 to FIG. 5, the vehicle includes a vehicle body and any of the foregoing battery packs disposed on the vehicle body. Specifically, the vehicle may be, but is not limited to, a passenger car, a truck, or a special-purpose engineering vehicle. The vehicle body includes structures such as a frame, wheels, a transmission box, and a steering wheel. The vehicle body is provided with any of the battery packs shown above.

The present invention has been described by using the foregoing embodiments. However, it will be understood that the foregoing embodiments are merely used for example and description purposes, and are not intended to limit the present invention to the scope of the described embodiments. In addition, a person skilled in the art will understand that the present invention is not limited to the foregoing embodiments, and more variations and modifications may be made according to the teachings of the present invention. These variations and modifications fall within the protection scope claimed by the present invention. The protection scope of the present invention is defined by the appended claims and equivalents thereof.

## Claims

1. A cooling assembly, comprising a first flow channel structure (21) and a second flow channel structure (22), wherein
a liquid outlet of the first flow channel structure is configured to be in communication with a liquid inlet of the second flow channel structure; and the first flow channel structure is configured to dissipate heat for a non-terminal-pole region of a battery set (40), and the second flow channel structure is configured to dissipate heat for a terminal-pole region of the battery set.

2. The cooling assembly according to claim 1, wherein the battery set comprises a plurality of battery cells, and an extension direction of a flow channel of at least one of the first flow channel structure and the second flow channel structure is the same as an arrangement direction of the battery cells in the battery set.

3. The cooling assembly according to any one of claims 1 to 2, wherein the battery set comprises a plurality of battery cells, and arrangement directions of the first flow channel structure and the second flow channel structure are the same as a length direction of the battery cell in the battery set.

4. The cooling assembly according to any one of claims 1 to 3, wherein the first flow channel structure and the second flow channel structure are spaced apart; and
the cooling assembly further comprises: a heat-conducting plate (23) connected between two adjacent flow channel structures in one or more first flow channel structures and one or more second flow channel structures.

5. The cooling assembly according to claim 4, wherein the heat-conducting plate is provided with a support block (27), and the support block is configured to support the battery set.

6. The cooling assembly according to any one of claims 1 to 5, wherein the first flow channel structure is a first harmonica tube, and the second flow channel structure is a second harmonica tube.

7. The cooling assembly according to any one of claims 1 to 6, wherein the cooling assembly comprises at least two unit regions, each of the unit regions is configured to correspond to one battery set and perform heat exchange on the one battery set, and the unit region comprises the first flow channel structure and the second flow channel structure; and
the at least two unit regions are arranged in the length direction of the battery cell.

8. The cooling assembly according to claim 7, wherein two adjacent unit regions are separated by using a first heat insulation plate (24).

9. The cooling assembly according to claim 8, wherein the first heat insulation plate is provided with a connecting portion (26), the connecting portion is configured to be connected to a baffle, and the baffle is configured to separate two adjacent battery sets.

10. The cooling assembly according to any one of claims 7 to 9, wherein each of the unit regions comprises a first flow channel structure and two second flow channel structures, and the first flow channel structure is located between the two second flow channel structures.

11. The cooling assembly according to claim 10, wherein each of the unit regions comprises two first flow channel structures and two second flow channel structures, and the two first flow channel structures are located between the two second flow channel structures.

12. The cooling assembly according to any one of claims 1 to 11, further comprising:
a liquid inlet manifold in communication with a liquid inlet of the first flow channel structure;
a liquid outlet manifold (14) in communication with a liquid outlet of the second flow channel structure; and
a connecting manifold (13) in communication between the liquid outlet of the first flow channel structure and the liquid inlet of the second flow channel structure.

13. The cooling assembly according to claim 12, wherein the cooling assembly comprises at least two unit regions, each of the unit regions is configured to correspond to one battery set and perform heat exchange on the one battery set, and the unit region comprises the first flow channel structure and the second flow channel structure; and
the liquid inlet manifold comprises at least two first liquid inlet manifolds (11), and each of the first liquid inlet manifolds corresponds to one unit region and is in communication with the liquid inlet of the first flow channel structure in the one unit region.

14. The cooling assembly according to claim 13, wherein the liquid inlet manifold further comprises a second liquid inlet manifold (12), and the second liquid inlet manifold is in communication with all the first liquid inlet manifolds.

15. The cooling assembly according to any one of claims 13 to 14, wherein the connecting manifold comprises at least two connecting manifold segments, and different connecting manifold segments are not in communication with each other; and
each unit region corresponds to one connecting manifold segment, and both the liquid outlet of the first flow channel structure and the liquid inlet of the second flow channel structure in each unit region are in communication with a corresponding connecting manifold segment.

16. The cooling assembly according to any one of claims 12 to 15, further comprising: a refrigerant connector (15) configured to be disposed on a battery box, the refrigerant connector being provided with a liquid inlet interface (16) and a liquid outlet interface (17), wherein
an input port on the liquid inlet manifold is in communication with the liquid inlet interface through a liquid inlet flexible tube (18); and an output port on the liquid outlet manifold is in communication with the liquid outlet interface through a liquid outlet flexible tube (19).

17. The cooling assembly according to any one of claims 12 to 16, wherein the cooling assembly further comprises a heat-conducting plate connected between two adjacent flow channel structures in one or more first flow channel structures and one or more second flow channel structures; and
two ends of the heat-conducting plate are each connected to the liquid outlet manifold, the liquid inlet manifold, or the connecting manifold through a connecting block (28), and the connecting block is further configured to support the battery set.

18. The cooling assembly according to claim 17, wherein a limiting end face (29) is provided on a side of the connecting block toward the battery set, and the limiting end face is configured to abut against a side face of the battery set in the arrangement direction of the battery cells.

19. The cooling assembly according to any one of claims 1 to 18, further comprising:
two second heat insulation plates (25) respectively disposed on two sides of the cooling assembly in the length direction of the battery cell in the battery set.

20. A battery pack, comprising a battery set and the cooling assembly according to any one of claims 1 to 19.

21. The battery pack according to claim 20, wherein the battery set comprises a terminal-pole region and a non-terminal-pole region, the terminal-pole region and the non-terminal-pole region are arranged in the length direction of the battery cell in the battery set, and the terminal-pole region is disposed at at least one end of the battery set; and
the terminal-pole region accounts for 2% to 25% of a length of the battery cell in the battery set, and the non-terminal-pole region accounts for 50% to 96% of the length of the battery cell.

22. The battery pack according to any one of claims 20 to 21, wherein a quantity of layers of the battery set is at least two, each layer comprises at least one battery set, and the first flow channel structure and the second flow channel structure are located between two adjacent layers of battery sets.

23. The battery pack according to claim 22, wherein a stacking direction of the at least two layers of battery sets, the arrangement direction of the battery cells in the battery set, and the length direction of the battery cell are perpendicular to each other.

24. The battery pack according to any one of claims 20 to 23, wherein each layer of battery sets comprises at least two battery sets arranged in the length direction of the battery cell.

25. A vehicle, comprising:
a vehicle body; and
the battery pack according to any one of claims 20 to 24 disposed on the vehicle body.
